(19) Europäisches Patentamt
European Patent Office
Office européen des brevets

(11) **EP 1 632 318 B1**

(12) **EUROPEAN PATENT SPECIFICATION**

(45) Date of publication and mention
of the grant of the patent:
**19.01.2011 Bulletin 2011/03**

(51) Int Cl.:
***B25J 9/16*** *(2006.01)*

(21) Application number: **05018886.1**

(22) Date of filing: **31.08.2005**

(54) **Robot interference prevention control device**

Steuerungsgerät zur Robotersinterferenzvermeidung

Dispositif de commande pour la prévention d'interférence pour robot

(84) Designated Contracting States:
**DE**

(30) Priority: **02.09.2004 JP 2004255881**

(43) Date of publication of application:
**08.03.2006 Bulletin 2006/10**

(73) Proprietor: **FANUC LTD**
**Minamitsuru-gun,**
**Yamanashi 401-0597 (JP)**

(72) Inventors:
• **Nihei, Ryo**
**Fujiyoshida-shi**
**Yamanashi 403-0005 (JP)**
• **Kato, Tetsuaki**
**Hadano-shi**
**Kanagawa 259-1326 (JP)**
• **Tsuchida, Yukinobu**
**FANUC Manhonharimomi**
**Minamitsuru-gun**
**Yamanashi 40-0511 (JP)**
• **Nagayama, Atsuo**
**Gunma 370-0867 (JP)**
• **Ichinose, Masakazu**
**FANUC Dai3virakaramatsu**
**Minamitsuru-gun**
**Yamanashi 40-0511 (JP)**

(74) Representative: **Schmidt, Steffen J.**
**Wuesthoff & Wuesthoff**
**Patent- und Rechtsanwälte**
**Schweigerstrasse 2**
**81541 München (DE)**

(56) References cited:
**EP-A- 0 544 346          EP-A- 1 366 867**
**DE-A1- 10 361 132     JP-A- 60 099 591**
**US-A- 6 166 504**

• **FREUND E ET AL: "EIN ALGORITHMS ZUR**
**KOLLISIONSERKUNNUNG UND -VERMEIDUNG**
**BEI ROBOTERNMIT ZYLINDERFORMIGEM**
**ARBEITSRAUM" ROBOTERSYSTEME,**
**SPRINGER VERLAG. BERLIN, DE, vol. 6, no. 1, 1**
**March 1990 (1990-03-01), pages 1-10,**
**XP000104118**

**Description**

BACKGROUND OF THE INVENTION

1. Field of the Invention

The present invention relates to an interference prevention control device for preventing interference between robots when simultaneously operating a plurality of robots in a manner in which their operating regions partially overlap.

2. Description of the Related Art

When using a plurality of robots for joint work, if the operating regions of the robots overlap, it is necessary to prevent interference between the robots.

Document EP 1 366 867 A2 discloses a method and a control device for avoiding a collision between a robot and obstacles, e.g. another robot. Said control device comprises means for calculating a stopping time and therewith the current position of moving robot parts in case of a stop command. Further, the control device comprises means for determining a collision between parts of the robot and other objects in a calculated trajectory as well as means for stopping the robot and/or the other objects, if a collision is predicted. The described control device is also adapted for interacting with other control devices for controlling a plurality of robots in the same working area.

As disclosed in JP-60-99591-A, as a further method of checking for this interference between robots, a technique is known of expressing each link of a robot arm by a line segment, simulating robot operation, finding the distance between closest parts of two line segments, and judging that there is a possibility of corresponding robot arms interfering with each other when that distance becomes smaller than a predetermined distance D.

The interference check method described in JP-60-99591-A simulates robot operation off line so as to check for interference and does not check for interference when actually driving robots. Along with the improvement in the capacity of current computers, performing similar calculations dynamically in real time has now become feasible. In this case, even if judging there is a possibility of interference immediately before that interference, it would be meaningless if the speed could not be reduced and interference ended up occurring anyway. Therefore, it is necessary to set a predetermined distance D of the above interference check to a value larger by the distance required for deceleration in advance and judge the possibility of interference earlier.

Further, if the robot arms would pass each other at a high speed, even if judging the smallest distance between two line segments by a distance D predetermined with the distance required for deceleration in mind, while in practice the arms would not interfere with each other, they would end up being liable to be judged as interfering.

SUMMARY OF THE INVENTION

Accordingly, an object of the present invention is to provide a robot interference prevention control device which checks for interference in the state of the robots being actually operated so as to prevent occurrence of interference and eliminates mistaken judgment of interference.

According to the present invention, there is provided a robot interference prevention control device which detects during operation the proximity among a plurality of robots placed in a state where operating regions thereof overlap and stops said robots before interference, which robot interference prevention control device includes a stop position calculating means for reading in advance a teaching program being executed by each robot covered and calculating a scheduled stop position in the case of executing a stop command for each robot after at least one predetermined interpolation period from the current time for each interpolation period; an interference judging means for judging the existence of the interference between robots at each calculated scheduled stop position; and a deceleration commanding means for commanding the robot to start deceleration when the interference judging means judges that there would be interference.

Preferably, the stop position calculating means reads in advance the teaching program being executed by each robot covered, expresses the position and orientation of each robot as a function of a time t, and uses the function to calculate a scheduled stop position in the case of executing a stop command for each robot after at least one predetermined interpolation period from the current time for each interpolation period.

In particular, preferably the stop position calculating means calculates a scheduled stop position from the value of the function at a time $t+n*\Delta t+T\_stop$, wherein t means the time at the current point of time, $t+n*\Delta t$ means the time after at least one interpolation period from said current time, and T_stop is the time required for stopping. For example, the position and orientation of the robot may be expressed by a linear sum of the function of the time t.

The robot interference prevention control device preferably further includes a means for outputting the results of judgment of the interference judging means to the outside as a signal.

Preferably, shape and position data of peripherals at which interference is liable to occur is set in advance, and the interference judging means further judges interference between the robots and the peripherals.

The robot interference prevention control device according to the present invention judges the existence of interference based on a scheduled position at which a robot would reach when outputting a stop command and, when judging that there would be interference, outputs a stop command at least one interpolation period before the position where the existence of interference is judged, so can reliably prevent interference and also will not mistakenly judge there would be interference in a case where interference would not occur. Even when robots pass each other at a high speed or when moving apart and where, in the prior art, interference would be judged, correct judgment becomes possible. Due to this, while guaranteeing that the robot would not interfere with each other, it becomes possible to use robots in a closer state than with the conventional interference prevention method.

BRIEF DESCRIPTION OF THE DRAWINGS

Thee above and other objects, features and the advantages of the present invention will be described below in more detail based on the preferred embodiments of the present invention with reference to the accompanying drawings, wherein:

FIG. 1 is a view for explaining a robot trajectory;
FIG. 2 is a graph showing a relationship between a time t and a movement distance s;
FIGS. 3A and 3B are views for explaining a B-spline curve in the case where N=6;
FIGS. 4A to 4C are graphs for explaining a deceleration speed resulting from a stop command in one embodiment of the present invention;
FIGS. 5A to 5C are views for explaining a method of obtaining a deceleration function;
FIGS. 6A and 6B are views for explaining a method of checking for interference between robots;
FIGS. 7A and 7B are flow charts of an interference check and interference prevention control processing;
FIG. 8 is a flow chart of processing after the flow chart of FIG. 7B;
FIG. 9 is a flow chart of processing when outputting results of an interference check to an external device;
FIG. 10 is a view of the system configuration showing an embodiment of a system according to the present invention;
FIG. 11 is a view of the system configuration of another embodiment to which the present invention is applied;
FIG. 12 is a view of the system configuration of still another embodiment to which the present invention is applied; and
FIG. 13 is a block diagram of a robot interference prevention control device according to the present invention.

DETAILED DESCRIPTION

Several embodiments of the present invention will be described below with reference to the drawings.

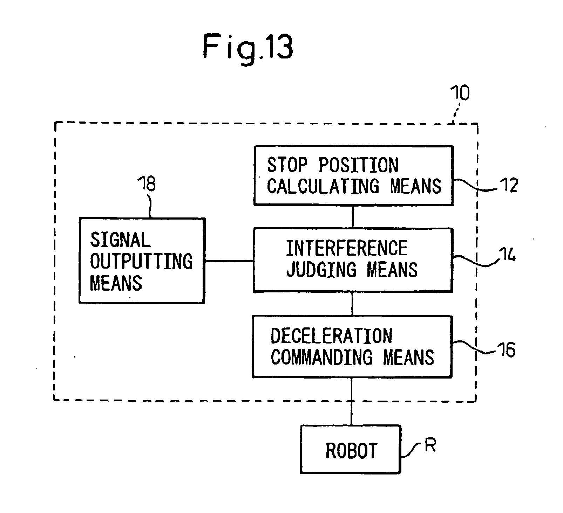

First, the principle of operation of the present invention will be described. The present invention is intended for preventing interference among robots etc. when using a plurality of robots to perform joint work. A robot interference prevention control device according to the present invention, as shown in FIG. 13, is provided with a stop position calculating means 12, an interference judging means 14, a deceleration commanding means 16, and a signal outputting means 18 for outputting the results of judgment of the interference judging means 14 to the outside as a signal. The stop position calculating means 12 calculates a position where a robot would decelerate to and stop at when a stop command is output to each robot at a certain instant during operation of the robot. The interference judging means 14 judges that no interference will be caused if there would be no interference with other robots, peripherals, etc. at that stop position. This judgment of interference is performed for every interpolation processing. When it is judged that there would be interference, the deceleration commanding means 16 immediately commands the robot to stop to make it decelerate and stop. However, in practice, even if starting deceleration after it is judged that there would be interference at a stop position, there would be interference at the stop position, so the stop position calculating means 12 calculates the stop position in advance by at least one interpolation period. That is, the stop position calculating means 12 reads in advance the operating program of each robot when executing a certain interpolation processing and calculates in advance the position where the robot will stop when starting a stop operation from the time of interpolation processing a preset number of unit interpolation periods after the interpolation processing currently to be executed. The interference judging means 14 judges that no interference will be caused if there would be no interference with other robots, peripherals, etc. at that stop position and outputs an operation command moving to the current interpolated position. On the other hand, when judging that there would be interference, since it is found that interference would end up occurring even if starting the stop processing delayed by a predetermined number of unit interpolation periods from the interpolation processing of the current point, the deceleration commanding means 16 starts the stop processing from the time of the current interpolation processing. Due to this, the occurrence of interference can be prevented in advance.

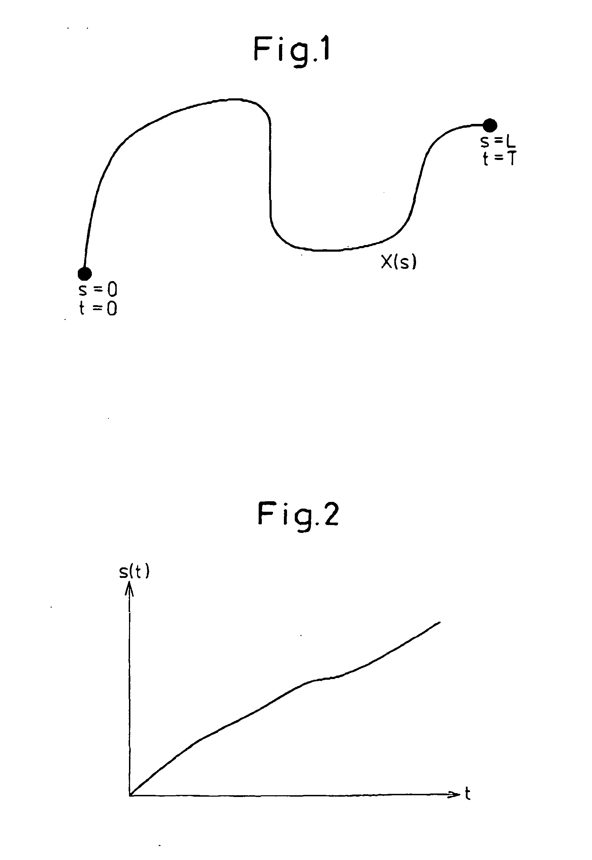

For explanation, here, as shown in FIG. 1, assume that the trajectory of each robot is expressed as a function X(s). Further, assume that the vector value of the function X(s) (hereinafter referred to as the "value of the function X (s)") expresses a six-dimensional vector able to specify the position and orientation in a three-dimensional space. Further, assume the parameter s of the function X is the distance along the trajectory (amount of movement). For example, if considering the case of movement from the starting point to the end point of a curve with a total length of L in the required time T, the starting point can be expressed by the time t=0 and the position on the curve s=0, while the end point can be expressed by the time t=T and the position on the curve s=L.

FIG. 2 shows a relationship between the time t and the position on the curve s (amount of movement). The function s(t) is a monotonously increasing function and expresses movement of a robot along a trajectory. The derivative s'(t) of s for t corresponds to the linear speed at the time t, while the second derivative s"(t) corresponds to the acceleration. Assuming that the movement of a robot is continuous in terms of both linear speed and acceleration and that the function s(t) is a function the second derivative of which is a continuous function. If combining the function X(s) and function s (t), the position and orientation of a robot at the time t can be expressed as X(s(t)). Further, if outputting a deceleration stop command at a certain time t0, designating the braking distance in that case as L_stop, and designating the braking time in that case as T_stop, the stop position becomes X (s(t0)+L_stop). Alternatively, the time (t0+T_stop) may be used to simply calculate the stop position X(s(t0+T_stop)) . In this way, the stop position for each robot is calculated and interference is checked for based on the calculated stop positions. When it is judged that interference would occur, a deceleration stop command is made to be output. Further, the teaching program is read in advance, the stop position X(s(t0)+L_stop) or X(s(t0+T_stop)) when assuming that a deceleration stop command is output at the time of interpolation processing executed after the elapse of a predetermined number of unit interpolation periods from the current interpolation processing is calculated, and, when judging that there would be interference, a deceleration stop command is output at the current time to thereby prevent the occurrence of interference.

In this way, according to the present invention, the teaching program is read in advance and a function X(s) expressing the trajectory of the robot is obtained in advance. In general, as methods for obtaining a smooth curve passing close to the given string of teaching points $P_0$, $P_1$, $P_2$,... $P_{N-1}$, Bezier curve interpolation, spline interpolation, nonuniform rational B spline (NURBS) interpolation, and other methods are known. In one embodiment of the present invention, a fourth order (third degree) B-Spline is used to obtain a function X(t) expressing the position and orientation at a time t from a string of teaching points $P_0$, $P_1$, $P_2$, . . . $P_{N-1}$ sequentially supplied by the operating program being executed.

If a string of N number of points $P_0$, $P_1$, $P_2$, ... $P_{N-1}$ and a knot vector T=[$t_0$,$t_1$,$t_2$, ... $t_{N+3}$] are given, the fourth order B-Spline curve is defined as shown in equation (1) by the linear sum of the function $N_{j,4}(t)$ (j=0,1,... N-1) of the time t.

$$X(t) = \sum_{j=0}^{N-1} P_j N_{j,4}(t) \qquad (t_3 \le t < t_N) \qquad \qquad \ldots \ (1)$$

where $N_{j,M}(t)$ is an Mth order B-Spline basis function which is generated from De Boor Cox recurrence formulas of equations (2-1) and (2-2).
When M ≥ 2

$$N_{j,M}(t) = \frac{t - t_j}{t_{j+M-1} - t_j} N_{j,M-1}(t) + \frac{t_{j+M} - t}{t_{j+M} - t_{j+1}} N_{j+1,M-1}(t) \qquad \ldots \ (2-1)$$

where, 0/0 = 0.
When M = 1
If $t_j \le t < t_{j+1}$,

$$N_{i,1}(t) = \begin{cases} 1 \ (i = j) \\ \\ 0 \ (i \ne j) \end{cases} \qquad \qquad \ldots \ (2-2)$$

The knot vector T= [$t_0$, $t_1$, $t_2$, ... $t_{N+3}$] is any monotonously increasing numerical sequence comprised of N+M number of numbers. Even if the given string of teaching points $P_0$, $P_1$, $P_2$, ... $P_{N-1}$ is the same, it is known that the shape of the curve will differ depending on the definition of the knot vector. Here, however, for simplification, the elements $t_i$ of the knot vector are defined as in equation (3). The curve $X(t)$ of equation (1) is defined in $t_3 \leq t < t_N$ excluding the three knots from the starting point side and the end point side, that is, the range of $0 \leq t < N-3$. "t" is made an integer value at a knot, but is made a real value at other points.

$$t_i = i-3 \quad (i=0,1,2,3,\ldots N, N+1, N+2, N+3) \ldots (3)$$

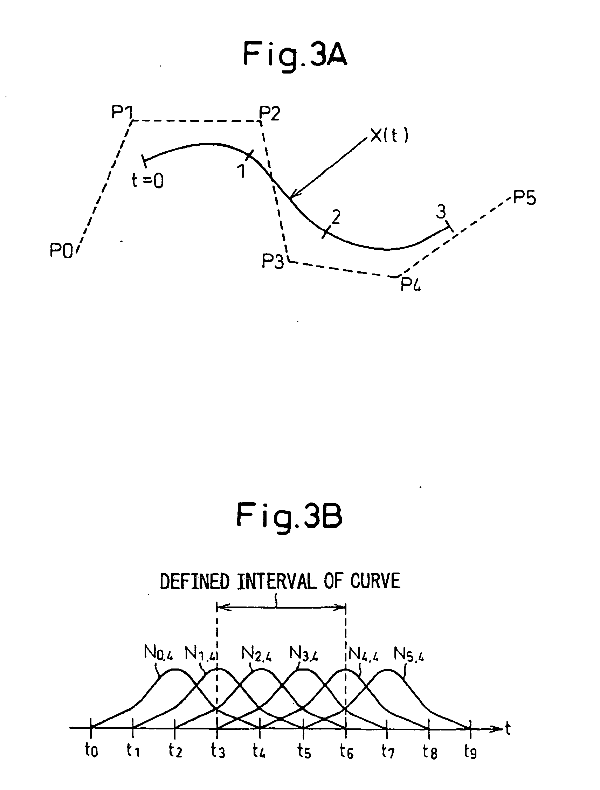

FIGS. 3A and 3B show an example of N=6. In this case, the B-Spline curve is defined by the following equation.

$$X(t) = N_{0,4}(t)P_0 + N_{1,4}(t)P_1 + N_{2,4}(t)P_2 + N_{3,4}(t)P_3$$
$$+ N_{4,4}(t)P_4 + N_{5,4}(t)P_5$$

where,

$$T = [t_0\ t_1\ t_2\ t_3\ t_4\ t_5\ t_6\ t_7\ t_8\ t_9]$$
$$= [-3\ -2\ -1\ 0\ 1\ 2\ 3\ 4\ 5\ 6]$$

As will be understood from equations (2-1) and (2-2) or FIG. 3B, the fourth order B-Spline basis function $N_{j,4}(t)$ becomes zero except in the four-knot interval range. If utilizing this property, when calculating equation (1), there is no need to give in advance all of the teaching points $P_0$, $P_1$, $P_2$, ... $P_{N-1}$. From the initial four points, the following equation (4) effective in the initial curve interval $t_3 \leq t < t_4$, that is, $0 \leq t < 1$, is obtained.

$$X(t) = \sum_{j=0}^{3} P_j N_{j,4}(t) \quad (t_3 \leq t < t_4) \quad \ldots (4)$$

In general, to obtain a function effective in a certain interval $t_a \leq t < t_b$, it is sufficient to find the smallest knot interval including this and obtain the sum for just the terms required for defining the curve of that range.

By reading in advance the teaching program, obtaining by equation (4) the function $X(t)$ expressing a smooth curve passing close to the four teaching points based on the four teaching points, and performing curvilinear integration shown in the following equation (5) on the function $X(t)$ along the curve, a function $s(t)$ of the trajectory of the robot expressed as a function of the position s on the curve (amount of movement) is obtained

$$s(t) = \int \sqrt{\frac{dx(t)}{dt} \bullet \frac{dx(t)}{dt}} dt \quad \ldots (5)$$

The physical meaning of the function $s(t)$ is the movement distance along the curve until the time t, so conversely if the distance s is given, the corresponding time t can be uniquely found. If expressing the function of the time t at the distance s as $t(s)$, the relationship between s and X as a combined function of the functions $X(t)$ and $t(s)$, that is, the function $X(s)$, is obtained as the following equation (6).

$$X(s) \cong X(t(s)) \ldots (6)$$

Further, since the position of the robot on the curve at the time t is expressed by $s(t)$ and the position and orientation when the position on the curve is s is expressed by $X(s)$, the position and orientation of the robot at the time t can be obtained by calculation as $X(s(t))$.

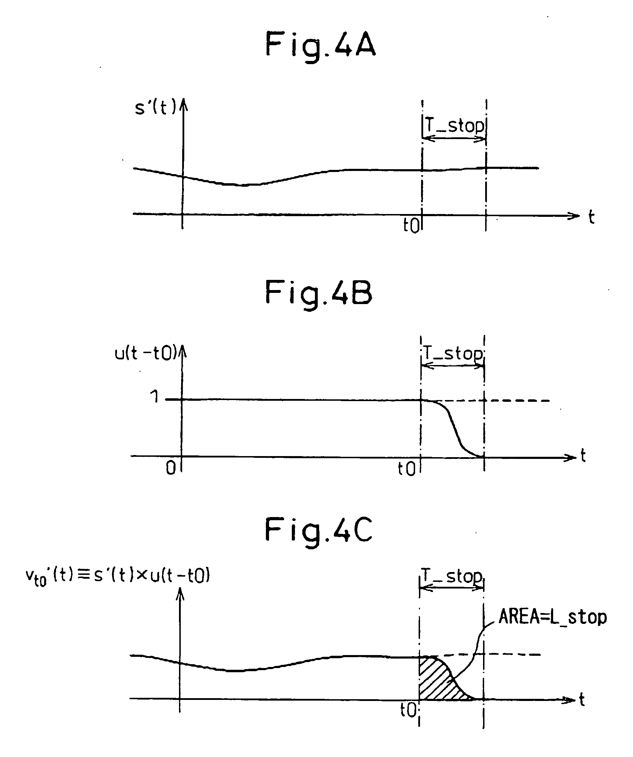

Next, the procedure for calculating the scheduled stop position in the case of decelerating and stopping a robot along a path from a certain time t0 will be described. Assume that the robot is operating at the time t0 at a position s(t0) and a linear speed s'(t0). A graph of the derived function s'(t) of s(t) at this time is shown in FIG. 4A. When not starting deceleration from the time t0, even after t0, the operation is planned to be continued in accordance with the linear speed such as shown in FIG. 4A. The speed pattern in the case of deceleration and stopping is obtained by multiplying the speed pattern of FIG. 4A with a function u(t-t0) smoothly monotonously decreasing from 1 to 0 as shown in FIG. 4B.

The result of multiplying the speed s'(t) with the deceleration function u(t) is shown in FIG. 4C. The braking time T_stop required for deceleration is the length of time of transition of the deceleration function u(t)(FIG. 4B) itself, the braking distance L_stop is the integrated value of the interval from the deceleration start time t0 to the stop time t0+T_stop of FIG. 4C, and the function s(t) is obtained by equation (5). Therefore, if u(t) is predetermined, the braking time T_stop and the braking distance L_stop can both be obtained by calculation.

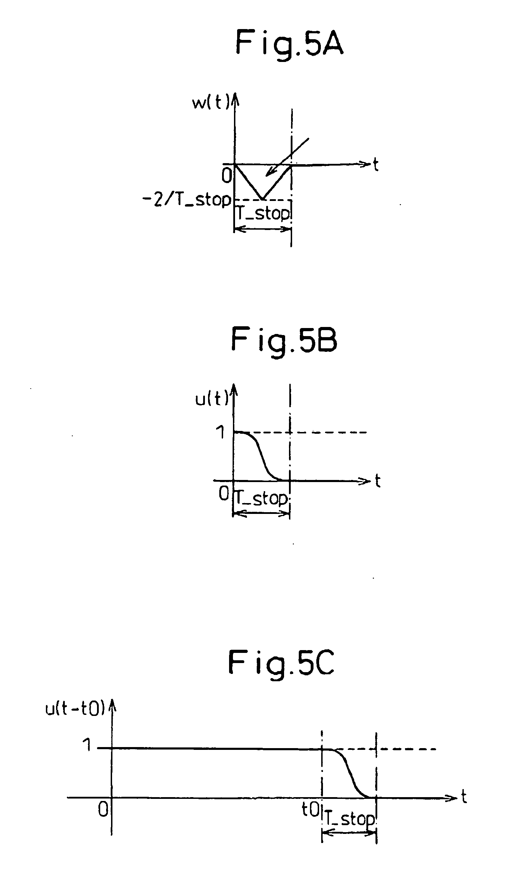

In this way, it is possible to obtain by calculation the scheduled position at which a robot will stop when starting deceleration from the time t0 and its orientation X(s(t0)+L_stop) at that position. Here, the function u(t) of FIG. 4B may be any function so long as the graph of the result of multiplication shown in FIG. 4C is a continuous first order derivative (acceleration is a continuous function). As an example, by integrating a function w(t) inverting a triangular shape such as shown in FIG. 5A (isosceles triangle of width of T_stop and height of 2/T_stop) (function determined by T_stop), a deceleration function u(t) such as shown in FIG. 5B is obtained (where u(0)=1). Note that in this case, the deceleration function (t-t0) having a fall start time of u(t) of t0 becomes as shown in FIG. 5C. Further, the braking time length T_stop is made constant here for simplification, but more generally it can be made a suitable value determined in accordance with inertia of the motor at that time or the moment acting on the motor due to gravity so that the acceleration force acting on the motor at the time of deceleration becomes constant.

By this method, when the deceleration start time t0 is t+n·Δt (in this case, t means the time at the current point of time and t+n·Δt means the time after n number of interpolation periods from the current point of time), the position and orientation at the scheduled stop are obtained by calculation of X(s(t+n·Δt)+L_stop). Here, n is a constant of 1 or more. Further, Δt is a unit interpolation processing time (unit interpolation period).

Further, in the calculation of the stop position, it is also possible to deem as the stop position the position X(s(t+n·Δt+T_stop)) obtained as a value of the function at the time t+n·Δt+T_stop after the elapse of the time T_stop required for stopping from predetermined time t+n·Δt after at least one interpolation period.

In the above way, at the time t, the scheduled stop position when issuing a deceleration stop command at the time of interpolation processing (t+n·Δt) after n number of interpolation periods from this time t is determined at the point of time of the current time t for all robots covered by interference check. Further, it is judged whether or not interference would occur based on the scheduled stop positions of the robots.

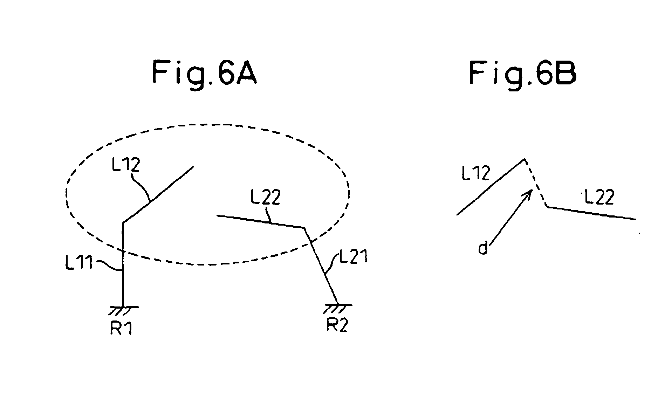

For the interference check, the known interference check method described in JP-60-99591-A is used. FIGS. 6A and 6B show the procedure for judgment of interface of a robot R1 and R2 comprised of a plurality of links in accordance with this interference check method. These robot links are formed into a model by line segments. The robot R1 is comprised of the line segments L11 and L12, while the robot R2 is comprised of the line segments L21 and L22. The distance d between the closest points of the line segments is determined for all pairs of the line segments forming the robot R1 and the line segments forming the robot R2. When the obtained distance d is smaller than a predetermined threshold value D, it is judged that there would be interference. Otherwise, it is judged that there would be no interference.

When it is judged that there would be no interference, an operation command to move each robot to the interpolated position at the current time t is output, while when it is judged that there would be interference, a deceleration stop command is output from the current interpolation period to stop the robots and prevent the occurrence of interference.

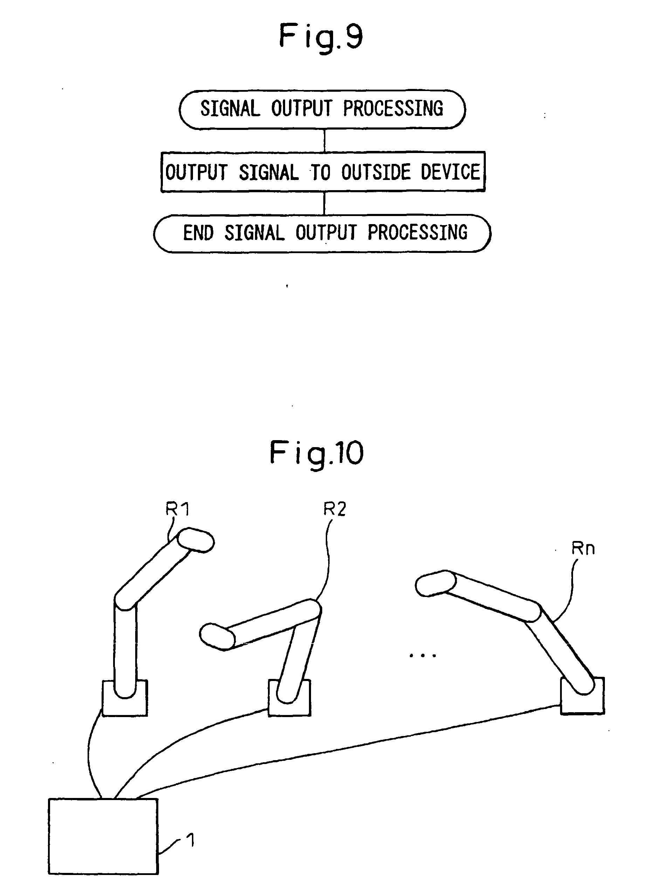

FIG. 10 to FIG. 12 show embodiments of a system for control for prevention of interference between robots according to the present invention. In the embodiment shown in FIG. 10, a single robot control device 1 is used to control the drive operations of a plurality of robot mechanical parts R1 to Rn. The robot control device 1 is also provided with the functions of the robot interference control device according to the present invention.

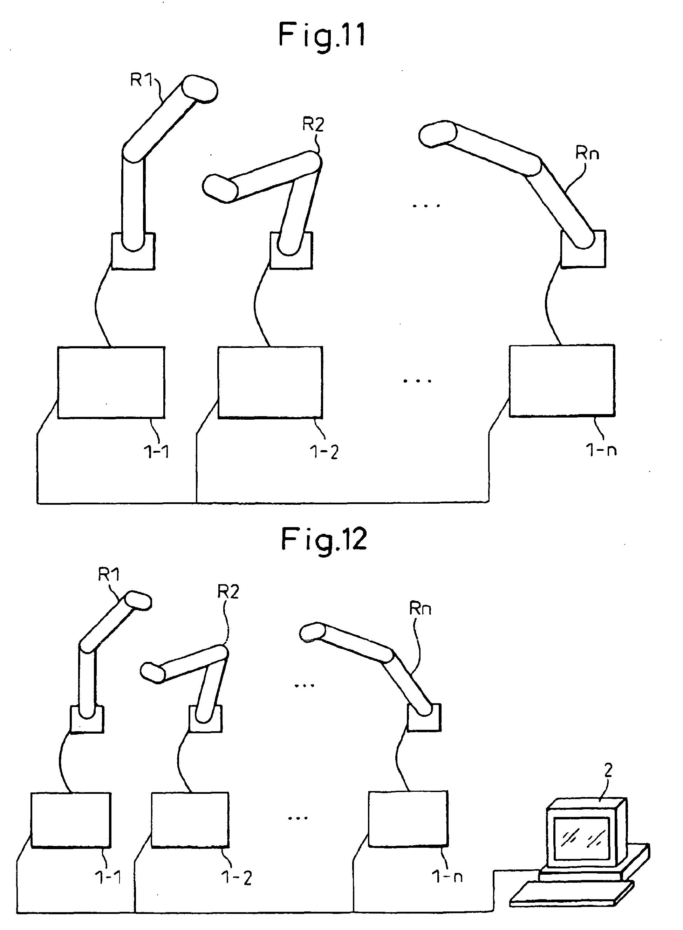

In the embodiment shown in FIG. 11, the robots R1 to Rn are provided with corresponding robot control devices 1-1 to 1-n, respectively. The robot control devices 1-1 to 1-n are connected by an Ethernet® or other network and transmit their internal variables through the network so as to enable the calculations for determining the scheduled stop positions and the judgment of the existence of interference to be performed in the robot control devices. The calculations for determining the scheduled stop positions and the judgment of the existence of occurrence of interference may also be performed all together at a single control device.

FIG. 12 shows an embodiment designed for use with a personal computer or other outside computer 2. In this embodiment, by connecting the computer 2 to a network of robot control devices 1-1 to 1-n and transmitting internal variables of the robot control devices 1-1 to 1-n to the computer 2, part or all of the calculations for determining the scheduled stop positions and the judgment of the existence of occurrence of interference can be performed at the computer 2.

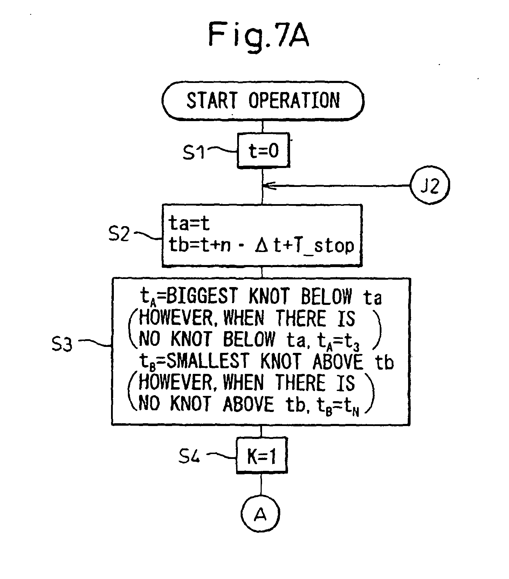

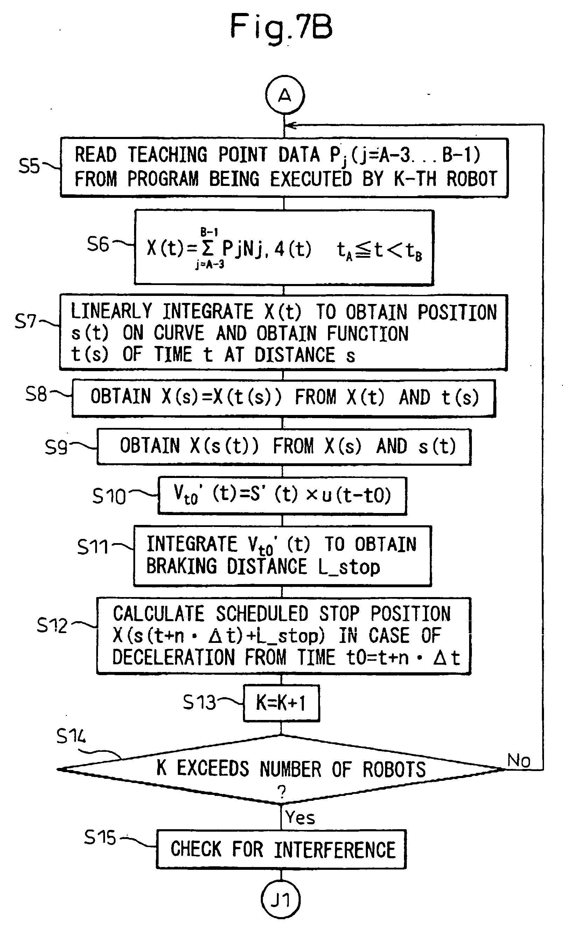

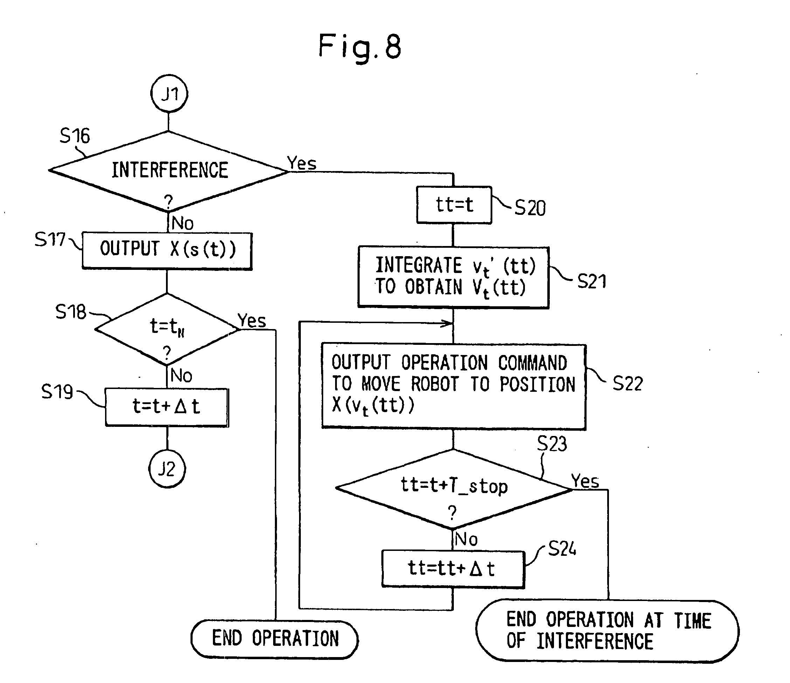

FIGS. 7A and 7B and FIG. 8 are flow charts of the control processing for preventing interference between robots and show the processing at the embodiment shown in FIG. 10.

First, the robots (robot mechanical parts) for which an interference check is required is set in the robot control device 1, and data relating to the positions and shapes of the peripherals covered by the interference check is input and set in the robot control device 1. Further, the braking time T_stop is set in the robot control device 1. When starting the robot operation, the processor of the robot control device 1 executes the interference check and interference prevention control processing shown in FIGS. 7A and 7B and FIG. 8.

The time t is set to "0" (step S1), the time t is set as the start time ta of the range for obtaining the B-spline curve from the string of teaching points, and "t+n·Δt+T_stop" is set as the end time tb of that range (step S2). Note that "n" is an integer number of 1 or more and designates the number of interpolation periods for checking whether or not interference would occur after n number of interpolation periods from the current point of time. It is determined in advance. The "n" may be set before the start of operation.

Next, the largest knot $t_A$ at the B-spline below the starting point ta of the range and the smallest knot $t_B$ above the end point tb of the range are determined. Note that when there is no knot below the starting point ta of the range, $t_A = t_3$. Further, when there is no knot above the end point tb of the range, the $t_N$ of the biggest knot is made $t_B$ (step S3).

The counter K for counting the robots (robot mechanical parts) set for coverage by the check is set to "1" (step S4), and the teaching data $P_j$ between the knots $t_A$ to $t_B$ is read out from the programs being run by the robot indicated by the value of the counter K (step S5). Note that the knots $t_A$ and $t_B$, as shown in equation (3), are integer values. The values correspond to the subscripts A and B of $t_A$ and $t_B$, so the values of the knots are expressed by the subscripts A and B. Therefore, the teaching points $P_j$ read out from the program become $P_{A-3}, P_{A-2}, \ldots P_{B-1}$.

Next, from the following equation (7) corresponding to equation (4), the curve X(t) in the interval $t_A \leq t < t_B$, is obtained (step S6).

$$X(t) = \sum_{j=A-3}^{B-1} P_j N_{j,4}(t) \qquad (t_A \leq t < t_B) \qquad \ldots (7)$$

The obtained curve X(t) is linearly integrated by equation (5) to obtain the position s(t) on the curve. This position s(t) on the curve is the movement distance along the curve until the time t, so conversely if the distance s is given, the corresponding time t is uniquely determined. Therefore, the inverse function t(s) is obtained from the position function s(t) (step S7).

From the thus obtained function X(t) of the curve and function t(s), a function X(s)=X(t(s)) expressing the position and orientation of the robot having the position (movement distance) s as a variable is obtained (step S8). Further, the position of the robot on the curve at the time t is the s(t) obtained at step S7. When the position on the curve is s, the robot position and orientation are expressed by the function X(s), so the robot position and orientation at the time t are obtained as X(s(t)) (step S9).

The derived function of the function s(t) obtained at step S7, that is, the linear speed s'(t), is obtained, the function u(t-t0) is obtained designating the time after the preset n number of interpolation periods from the current time t as t0 (t0 = current time t + n·Δt), and the derived function s'(t) is multiplied by the function u(t-t0) to obtain the linear speed $v_{t0}'(t)$ expressing the speed after deceleration based on the following equation (8) (step S10).

$$v_{t0}'(t) = s(t) \times u(t-t0) \qquad (8)$$

This linear speed $V_{t0}'(t)$ is integrated from the deceleration start time t0 to the braking time T_stop to obtain the braking distance L_stop (step S11).

The scheduled stop position X(s(t0)+L_stop)= X(s(t+n·Δt)+L_stop) when starting deceleration for stopping at the time t0=t+n·Δt after n number of interpolation periods from the current interpolation processing time (time t) is calculated and stored from the L_stop obtained at step S11, the s(t) obtained at step S7, and the function X(s) obtained at step S8 (step S12).

Next, the value of the counter K is incremented by exactly 1 (step S13), and it is judged whether or not the value of the counter K has exceeded the number of robots set for coverage under the check (step S14). If not exceeding it, the procedure returns to step S5, where the processing of the above step S5 on is executed for the next robot indicated by the same number as the value of the counter K, so that the scheduled stop position X(s(t+n·Δt)+L_stop) when starting deceleration for stopping at the time t0=t+n·Δt after n number of interpolation periods from the current interpolation processing time (time t) is then obtained.

Next, when the scheduled stop position X (s(t+n·Δt)+L_stop) of the robot under check is determined, the interference between robots is checked and the interference with peripherals etc. is checked (step S15). This interference check, as explained above, is performed by an already known method, so its explanation will be omitted.

When this interference check judges that there will be no interference (step S16), an operation command to move the robot to the interpolated position X(s(t)) at the time t obtained at step S9 for each robot is output to each robot (step S17). Further, it is judged whether or not the time t has reached the final time $t_N$ (step S18). If it has not reached it, the time t is incremented by exactly the unit interpolation period $\Delta t$ (step S19), then the procedure returns to step S2 where the processing of the above step S2 on is performed. After this, in so far as the occurrence of interference is not predicted, the above processing is repeated until the time t reaches the final time $t_N$. When it reaches the final time $t_N$, this interference prevention processing is ended.

On the other hand, when it is judged at step S16 that there would be interference, the current time t is set as the initial value for the tt showing the time at the time of deceleration (step S20), and the function $v_t'$ (tt) expressing the speed obtained designating the deceleration start time as t and the time variable as tt from the function $v_{t0}'$ (t) expressing the speed at the time of the deceleration operation obtained at step S11 is integrated so as to obtain the amount of movement $v_t$(tt) (step S21). Next, based on the function X(s) obtained at step S8, the robot position and orientation X ($v_t$(tt)) are obtained assuming s=$v_t$(tt) and an operation command is output to the robot so as to bring the robot into the obtained position and orientation (step S22).

Further, it is judged whether or not the value of the time tt has reached the value of the deceleration start time t plus the braking time T_stop (step S23). If not reaching it, the time tt is incremented by the unit interpolation period $\Delta t$ (step S24). Then, the procedure returns to step S22, where the above processing is repeated until the value of the time tt reaches the value of the deceleration start time t plus the braking time T_stop and the robot stops.

In this way, when it is predicted that interference will occur after a predetermined n number of interpolation periods from the current time, it is possible to prevent the occurrence of interference by starting deceleration from the current point of time.

Note that in the above embodiment, at step S12, the scheduled stop position was determined from s and the position of the braking distance L_stop (amount of movement), but it is also possible to determine the scheduled stop position simply from the time. That is, at step S12, it is also possible to calculate the scheduled stop position X(s(t0+T_stop)) = X(s(t+n·$\Delta t$+T_stop)).

Further, in addition to the above interference prevention control processing, it is also possible to perform the signal output processing such as shown in FIG. 9 and output the results of judgment of the interference check to the peripherals etc. For example, when it is judged at step S16 that there would be interference, it is also possible to output a signal indicating that there would be interference to an outside device and jump to step S20 in the procedure.

In the above embodiment, a single robot control device 1 of the system having the configuration shown in FIG. 10 is used to control a plurality of robots (robot mechanical parts) R1 to Rn and the interference prevention control device is formed by the robot control device 1. On the other hand, in the case of the system configuration wherein the robots shown in FIG. 11 are provided with their corresponding control devices 1-1 to 1-n, respectively, the processors of the robot control devices 11-1 to 1-n perform the processing shown in the above FIGS. 7A and 7B and FIG. 8. Among them, the processing of step S4, S13, and S14 is not performed. Before step S15, the scheduled stop position X(s(t0)+L_stop) =X(s(t+n·$\Delta t$)+L_stop) or X(s(t0+T_stop))=X(s(t+n·$\Delta t$+T_stop)) calculated at each of the robot control devices 1-1 to 1-n is exchanged and the interference check of step S15 is performed. Alternatively, it is possible to have any one of the robot control devices collect the scheduled stop positions of the robots checked for interference through the network and use this robot control device for the interference check. When there would be interference, it is sufficient to stop the operation of the interfering robot or all of the robots in the system.

Further, in the case of the system shown in FIG. 12, by transmitting the internal variables of the robot control devices 1-1 to 1-n from the robot control devices 1-1 to 1-n through the network, it is possible to have part of the calculations of the scheduled stop positions or judgment of the existence of an occurrence of interference be performed at a computer 2 connected thereto through the network. Further, it is also possible to use the computer 2 to perform all of the processing of the above FIGS. 7A and 7B and FIG. 8.

**Claims**

1. A robot interference prevention control device (10) which detects during operation the proximity among a plurality of robots placed in a state where operating regions thereof overlap and stops said robots before interference, said robot interference prevention control device **characterized by** comprising:

   a stop position calculating means (12) for reading in advance a teaching program being executed by each robot covered and calculating a scheduled stop position in the case of executing a stop command for each robot after at least one predetermined interpolation period from the current time for each interpolation period;
   an interference judging means (14) for judging the existence of said interference between robots at each calculated scheduled stop position; and
a deceleration commanding means (16) for commanding said robot to start deceleration when said interference judging means judges that there would be interference.

2. The robot interference prevention control device according to claim 1, wherein said stop position calculating means (12) reads in advance the teaching program being executed by each robot covered, expresses the position and orientation of each robot as a function of a time t, and uses said function to calculate a scheduled stop position in the case of executing a stop command for each robot after at least one predetermined interpolation period from the current time for each interpolation period.

3. The robot interference prevention control device according to claim 2, wherein said stop position calculating means (12) calculates a scheduled stop position from the value of said function at a time t+n*Δt+T_stop, wherein t means the time at the current point of time, t+n*Δt means the time after at least one interpolation period from said current time, and T_stop is the time required for stopping.

4. The robot interference prevention control device according to claim 2 or 3, wherein the position and orientation of said robot are expressed by a linear sum of the function of the time t.

5. The robot interference prevention control device according to claim 1 or 2, further comprising a means (18) for outputting the results of judgment of said interference judging means (14) to the outside as a signal.

6. The robot interference prevention control device according to claim 1 or 2, wherein shape and position data of peripherals at which interference is liable to occur is set in advance, and said interference judging means (14) further judges interference between said robots and said peripherals.

**Patentansprüche**

1. Roboterstörvermeidungs-Steuervorrichtung (10), die während eines Arbeitsvorgangs die Umgebung einer Vielzahl von Robotern erfasst, deren Arbeitsbereiche einander überlappen, und die die Roboter anhält, bevor sie einander behindern, wobei die Roboterstörverhinderungs-Steuervorrichtung **gekennzeichnet ist durch**:

ein Haltepositionsberechnungsmittel (12) zum vorherigen Lesen eines **durch** jeden Roboter auszuführenden Anweisungsprogrammes und zum Berechnen einer geplanten Halteposition nach wenigstens einer vorbestimmten Interpolationsperiode von der Laufzeit jeder Interpolationsperiode für den Fall eines auszuführenden Haltebefehls für jeden Roboter;
ein Störungserfassungsmittel (14) zum Erfassen einer vorliegenden Behinderung zwischen Robotern an jeder berechneten, geplanten Halteposition; und
ein Verzögerungsbefehlsmittel (16) zum Ausgeben des Befehls an den Roboter, eine Verzögerung zu beginnen, wenn das Störungserfassungsmittel feststellt, dass eine Behinderung vorliegt.

2. Roboterstörvermeidungs-Steuervorrichtung gemäß Anspruch 1, wobei das Haltepositionsberechnungsmittel (12) im Voraus das durch jeden Roboter auszuführende Anweisungsprogramm liest, die Position und Orientierung jedes Roboters als eine Funktion der Zeit t ausdrückt und diese Funktion nutzt, um eine geplante Halteposition für den Fall zu berechnen, dass ein Haltebefehl für jeden Roboter nach wenigstens einer vorbestimmten Interpolationsperiode von der Laufzeit jeder Interpolationsperiode ausgeführt wird.

3. Roboterstörvermeidungs-Steuervorrichtung gemäß Anspruch 2, wobei das Haltepositionsberechnungsmittel (12) eine geplante Halteposition von dem Wert der Funktion zur Zeit t+n*Δt+T_stop berechnet, wobei t die Zeit zu einem bestimmten Zeitpunkt, t+n*Δt die Zeit nach wenigstens einer Interpolationsperiode von der Laufzeit ausdrückt und T_stop die zum Anhalten benötigte Zeit angibt.

4. Roboterstörverhinderungs-Steuervorrichtung gemäß Anspruch 2 oder 3, wobei die Position und Orientierung des Roboters durch eine lineare Summe der Funktion der Zeit t ausgedrückt wird.

5. Roboterstörvermeidungs-Steuervorrichtung gemäß Anspruch 1 oder 2, mit einem Mittel (18) zum Ausgeben der Ergebnisse der Bewertung des Störerfassungsmittel (14) an die Umgebung in Form eines Signals.

**6.** Roboterstörvermeidungs-Steuervorrichtung gemäß Anspruch 1 oder 2, wobei Form und Positionsdaten des Umfelds, in dem Behinderungen auftreten, im Voraus festgelegt werden, und das Störungserfassungsmittel (14) ferner Behinderungen zwischen den Robotern und dem Umfeld erfasst.

**Revendications**

**1.** Dispositif de commande pour la prévention d'interférence pour robot (10) qui détecte pendant le fonctionnement la proximité parmi une pluralité de robots placés dans un état dans lequel les régions de fonctionnement de ceux-ci se chevauchent et arrête lesdits robots avant l'interférence, ledit dispositif de commande pour la prévention d'interférence pour robot étant **caractérisé en ce qu'**il comprend :

un moyen de calcul de position d'arrêt (12) destiné à lire à l'avance un programme d'enseignement étant exécuté par chaque robot couvert et à calculer une position d'arrêt prévu dans le cas de l'exécution d'une commande d'arrêt pour chaque robot après au moins une période d'interpolation prédéterminée à partir de l'instant actuel pour chaque période d'interpolation ;
un moyen de jugement d'interférence (14) destiné à juger l'existence de ladite interférence entre les robots à chaque position d'arrêt prévu calculée ; et
un moyen de commande de décélération (16) destiné à commander ledit robot pour commencer une décélération lorsque ledit moyen de jugement d'interférence juge qu'il y aurait interférence.

**2.** Dispositif de commande pour la prévention d'interférence pour robot selon la revendication 1, dans lequel ledit moyen de calcul de position d'arrêt (12) lit à l'avance le programme d'enseignement étant exécuté par chaque robot couvert, exprime la position et l'orientation de chaque robot comme une fonction d'un temps t et utilise ladite fonction pour calculer une position d'arrêt prévu dans le cas de l'exécution d'une commande d'arrêt pour chaque robot après au moins une période d'interpolation prédéterminée à partir de l'instant actuel pour chaque période d'interpolation.

**3.** Dispositif de commande pour la prévention d'interférence pour robot selon la revendication 2, dans lequel ledit moyen de calcul de position d'arrêt (12) calcule une position d'arrêt prévu à partir de la valeur de ladite fonction à un temps $t+n*\Delta t+T\_stop$, dans laquelle t représente le temps au niveau du point dans le temps actuel, $t+n*\Delta t$ représente le temps après au moins une période d'interpolation à partir dudit instant actuel, et T_stop représente le temps requis pour l'arrêt.

**4.** Dispositif de commande pour la prévention d'interférence pour robot selon la revendication 2 ou 3, dans lequel la position et l'orientation dudit robot sont exprimées par une somme linéaire de la fonction du temps t.

**5.** Dispositif de commande pour la prévention d'interférence pour robot selon la revendication 1 ou 2, comprenant en outre un moyen (18) destiné à délivrer en sortie les résultats de jugement du moyen de jugement d'interférence (14) vers l'extérieur en tant que signal.

**6.** Dispositif de commande pour la prévention d'interférence pour robot selon la revendication 1 ou 2, dans lequel des données de forme et de position des périphériques au niveau desquels l'interférence est susceptible de se produire sont établies à l'avance, et ledit moyen de jugement d'interférence (14) juge de plus l'interférence entre lesdits robots et lesdits périphériques.

# Fig.1

s = L
t = T

s = 0
t = 0

X(s)

# Fig.2

s(t)

t

# Fig.3A

# Fig.3B

# Fig.4A

$s'(t)$

T_stop

t0

t

# Fig.4B

$u(t-t0)$

T_stop

1

0

t0

t

# Fig.4C

$v_{t0}'(t) \equiv s'(t) \times u(t-t0)$

T_stop

AREA=L_stop

t0

t

# Fig.5A

# Fig.5B

# Fig.5C

# Fig.6A

# Fig.6B

# Fig.7A

START OPERATION

S1 — t=0

J2

S2 —
ta=t
tb=t+n · $\Delta$t+T_stop

S3 —
$t_A$=BIGGEST KNOT BELOW ta
(HOWEVER, WHEN THERE IS
NO KNOT BELOW ta, $t_A$=$t_3$)
$t_B$=SMALLEST KNOT ABOVE tb
(HOWEVER, WHEN THERE IS
NO KNOT ABOVE tb, $t_B$=$t_N$)

S4 — K=1

A

# Fig.7B

A

S5 — READ TEACHING POINT DATA $P_j$ (j=A-3...B-1) FROM PROGRAM BEING EXECUTED BY K-TH ROBOT

S6 — $X(t) = \sum_{j=A-3}^{B-1} P_j N_{j,4}(t) \quad t_A \leq t < t_B$

S7 — LINEARLY INTEGRATE $X(t)$ TO OBTAIN POSITION $s(t)$ ON CURVE AND OBTAIN FUNCTION $t(s)$ OF TIME $t$ AT DISTANCE $s$

S8 — OBTAIN $X(s)=X(t(s))$ FROM $X(t)$ AND $t(s)$

S9 — OBTAIN $X(s(t))$ FROM $X(s)$ AND $s(t)$

S10 — $V_{t0}{}'(t)=S'(t) \times u(t-t0)$

S11 — INTEGRATE $V_{t0}{}'(t)$ TO OBTAIN BRAKING DISTANCE L_stop

S12 — CALCULATE SCHEDULED STOP POSITION $X(s(t+n \cdot \Delta t)+L\_stop)$ IN CASE OF DECELERATION FROM TIME $t0=t+n \cdot \Delta t$

S13 — K=K+1

S14 — K EXCEEDS NUMBER OF ROBOTS ? — No

Yes

S15 — CHECK FOR INTERFERENCE

J1

# Fig.8

EP 1 632 318 B1

```
                    (J1)
                     │
        S16          │
          ╲     ◇────┴────◇         Yes
           ╲  INTERFERENCE──────────────────────┐
            ◇      ?      ◇                      │
                  │                          ┌───┴───┐
                  │No                        │ tt=t  │──S20
        S17╲  ┌───┴────────┐                 └───┬───┘
           ╲  │OUTPUT X(s(t))│                   │
              └───┬────────┘         ┌───────────┴──────────┐
                  │                  │INTEGRATE v_t'(tt)     │
                  │                  │TO OBTAIN V_t(tt)      │──S21
        S18╲  ◇───┴───◇   Yes        └───────────┬──────────┘
           ╲  ◇  t=t_N ◇──────┐                  │
            ◇    ?    ◇       │  ┌───────────────┤
                  │           │  │   ┌───────────┴──────────────┐
                  │No         │  │   │OUTPUT OPERATION COMMAND   │
        S19╲  ┌───┴────┐      │  │   │TO MOVE ROBOT TO POSITION  │──S22
           ╲  │t=t+Δt  │      │  │   │X(v_t(tt))                 │
              └───┬────┘      │  │   └───────────┬──────────────┘
                  │           │  │               │        S23
                 (J2)         │  │         ◇─────┴─────◇     ╱
                              │  │         ◇ tt=t+T_stop◇───╱── Yes
                              │  │         ◇     ?      ◇        │
                              │  │               │No             │
                              │  │          ┌────┴─────┐  S24    │
                              │  └──────────│tt=tt+Δt  │─╱       │
                              │             └────┬─────┘         │
                    ┌─────────┴──────┐    ┌──────┴───────────────┴─┐
                    │ END OPERATION  │    │ END OPERATION AT TIME  │
                    └────────────────┘    │ OF INTERFERENCE        │
                                          └────────────────────────┘
```

# Fig.9

```
   ( SIGNAL OUTPUT PROCESSING )
              │
   │ OUTPUT SIGNAL TO OUTSIDE DEVICE │
              │
   ( END SIGNAL OUTPUT PROCESSING )
```

# Fig.10

R1          R2                    Rn

. . .

1

# Fig.11

# Fig.12

# Fig.13

STOP POSITION CALCULATING MEANS ~12

SIGNAL OUTPUTTING MEANS

INTERFERENCE JUDGING MEANS ~14

DECELERATION COMMANDING MEANS ~16

ROBOT /R

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1366867 A2

- JP 60099591 A